# DEMANDE DE BREVET EUROPEEN

(11) **EP 1 262 709 A1**
(43) Date de publication de la demande: **04.12.2002**
(21) Numéro de dépôt: 01113337.8
(22) Date de dépôt: 01.06.2001
(51) Int. Cl.: F16L 59/02, F16L 59/14

(54) **Isolateur tubulaire**

(71) Demandeur: NMC S.A., B-4731 Eynatten/Raeren (BE)
(72) Inventeur: Navez, Vincent, 1348 Louvain-la-Neuve (BE); Kohl, Herbert, 4720 Kelmis (BE)
(74) Mandataire: Kihn, Pierre Emile Joseph

(57) **Abrégé**

Isolateur tubulaire comprenant une cavité centrale délimitant une section S1, destinée à recevoir un élément à isoler tubulaire et au moins une chambre périphérique délimitant une section S2, dans lequel la section S1 de la cavité centrale est adaptée à recevoir un élément à isoler délimitant une section S1 et dans lequel la section S2 de la chambre périphérique est comprimée lorsque l'élément à isoler comporte une section SI2 avec SI2 > SI1.

## Description

La présente invention concerne un isolateur tubulaire.

On connaît actuellement des isolateurs tubulaires avec une cavité unique circulaire permettant d'y loger un élément à isoler, notamment des tuyaux de chaufferie, de climatisation, d'eau potable etc..

Un désavantage de ces isolateurs tubulaires est qu'une isolation thermique optimale ne peut être atteinte que si la section de l'élément à isoler correspond à la section de la cavité de l'isolateur tubulaire. Il en résulte qu'il faut un isolateur tubulaire spécifique pour chaque format d'élément à isoler.

L'objet de la présente invention et de proposer un isolateur tubulaire adapté à différents formats d'éléments à isoler.

Conformément à l'invention, cet objectif est atteint par un isolateur tubulaire comprenant une cavité centrale délimitant une section S1, destinée à recevoir un élément à isoler tubulaire et au moins une chambre périphérique délimitant une section S2, dans lequel la section S1 de la cavité centrale est adaptée à recevoir un élément à isoler présentant une section SI1 et dans lequel la section S2 de la zone compressible est comprimée lorsque l'élément à isoler comporte une section SI2 avec SI2 > SI1.

En d'autres termes, l'isolateur tubulaire présente en outre de la cavité centrale une chambre ou zone compressible qui est comprimé(e) lorsque la section de l'élément à isoler dépasse une valeur prédéterminée. Cette chambre compressible compense donc l'augmentation de la section ou du volume par unité de longueur de l'élément à isoler.

L'isolateur selon la présente invention peut donc accommoder différents formats d'éléments à isoler. En effet, lorsque l'on introduit dans l'isolateur tubulaire, un élément à isoler d'une section SI1 adaptée à la section S1 de la cavité centrale, la chambre périphérique n'est quasiment pas comprimée. Si la section de l'élément à isoler SI2 est plus grande que la section SI1, la chambre périphérique est comprimée pour compenser du moins en partie la différence entre les sections SI2 et SI1. Le diamètre extérieur de l'isolateur tubulaire reste inchangé, indépendamment de la section de l'élément à isoler. Ceci est avantageux lors du passage de murs ou de dalles avec les isolateurs tubulaires.

En général, l'isolateur tubulaire est fendu sur toute sa longueur de sorte à pouvoir le mettre autour l'élément à isoler. Afin d'obtenir une isolation acceptable, il est nécessaire de pouvoir refermer la fente après avoir logé l'élément à isoler dans la cavité centrale. Le système avec une cavité centrale et une chambre périphérique permet de pouvoir refermer la fente puisque la section supérieure de l'élément à isoler est compensée par une compression de la chambre périphérique.

Selon un mode de réalisation particulier, la section de la cavité centrale S1 est supérieure ou égale à la section de l'élément à isoler (SI1) et inférieure ou égale à la section de l'élément à isoler SI2.

De manière préférée, la section de la cavité centrale plus celle de la chambre périphérique (S1 + S2) est supérieure ou égale à la section de l'élément à isoler SI2.

Il est avantageux que la section de la chambre périphérique S2 soit supérieure ou égale à la différence entre la section de l'élément à isoler SI2 et la section de l'élément à isoler SI1 (S2 ≥ (SI2 - SI1)).

Selon un mode de réalisation préféré, la cavité centrale possède, en coupe, une forme substantiellement triangulaire. Cette forme substantiellement triangulaire permet de coincer des éléments à isoler tubulaire à section circulaire.

Un des avantages d'un tel isolateur tubulaire est qu'il n'est pas nécessaire de fixer l'élément à isoler à l'intérieur de la cavité centrale pour assurer le maintien en place de l'élément à isoler à l'intérieur de l'isolateur tubulaire.

Si l'une des bases de la cavité centrale substantiellement triangulaire est de forme concave ou en arc de cercle, la paroi de l'élément à isoler peut être en contact étroit avec une partie de la cavité.

On peut donner à deux des bases de la cavité centrale substantiellement triangulaire une forme substantiellement convexe de façon à améliorer encore le contact de l'élément à isoler avec les parois de la cavité centrale.

Lorsque la cavité centrale est substantiellement triangulaire, il est avantageux de prévoir des chambres périphériques le long de deux ou trois des bases de la cavité centrale.

Selon un mode de réalisation particulièrement préféré, les chambres périphériques possèdent, en coupe, une forme substantiellement elliptique.

Bien entendu, d'autres formes géométriques pour la cavité centrale et les chambres périphériques sont envisageables en fonction de la forme de l'élément à isoler et en fonction de la différence de section entre les éléments à isoler.

De préférence, l'isolateur tubulaire est en mousse. Cette mousse comprend avantageusement un ou plusieurs des polymères choisis parmi le groupe constitué de LDPE (polyéthylène à base densité), LLDPE (polyéthylène linéaire à base densité), HDPE (polyéthylène à haute densité), PP (polypropylène), PU (polyuréthane), PVC (polychlorure de vinyle), PS (polystyrène), SAN (Styrène acrylonitrile), EVA (acétate de vinyl éthylène), EBA (acétate de butyl éthylène), et EAA (acétate d'éthyle éthylène).

L'isolateur tubulaire peut être un isolateur thermique ou calorifuge, un isolateur acoustique ou bien un isolateur contre les abrasions mécaniques ou chimiques.

La (les) chambre(s) périphérique(s) peuvent soient être vides c.-à-d. remplies d'air ou bien comprendre un matériau notamment une mousse qui est plus compressible que le matériau formant l'isolateur tubulaire.

Par la suite, un mode de réalisation avantageux de l'invention est décrit à titre d'exemple en se référant à la figure annexée dans laquelle la:
- Fig.°1:: représente une vue de dessus en coupe d'un mode de réalisation avantageux d'un isolateur tubulaire

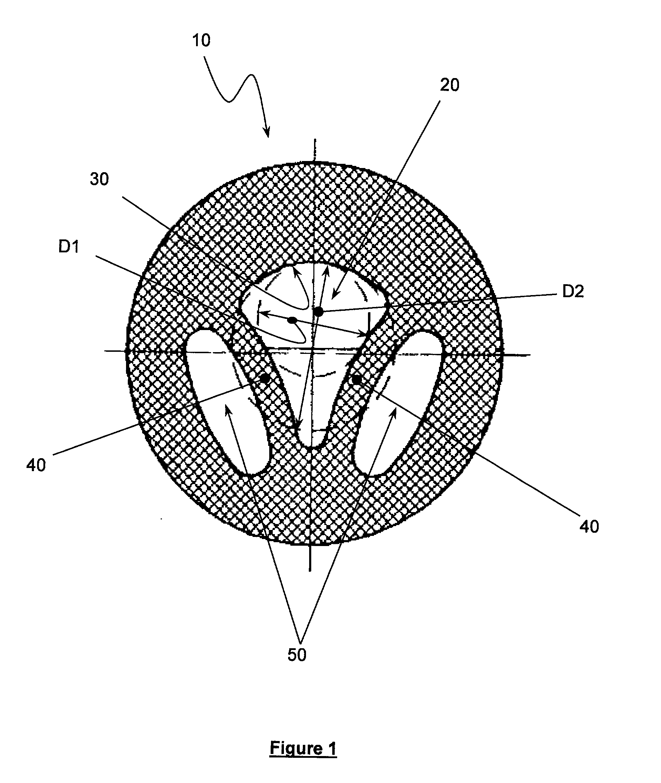

La fig. 1 montre un isolateur tubulaire 10 comprenant une cavité centrale 20, apte à recevoir un élément à isoler dont la section peut varier entre les valeurs SI1 et SI2. Dans le cas d'un élément cylindrique, le diamètre de l'élément à isoler peut varier entre les valeurs D1 et D2.

La cavité centrale 20 possède, en coupe, une forme substantiellement triangulaire dont une des bases de la cavité centrale possède une forme concave ou en arc de cercle 30 et dont les deux autres bases de la cavité centrale substantiellement triangulaire sont convexes 40.

La paroi de l'élément tubulaire est donc toujours en contact avec une partie de la cavité centrale 20 et ceci indépendamment de sa section ou de son diamètre.

Cette forme substantiellement triangulaire de la cavité centrale 20 permet d'accommoder des éléments à isoler tubulaires à section circulaire, à section ovale et/ou à section elliptique.

L'isolateur tubulaire 10 comprend en outre deux chambres périphériques 50 qui se situent le long des bases convexes 40 de la cavité centrale 20. Ces chambres périphériques 50 possèdent, en coupe, une forme substantiellement elliptique.

Lorsqu'un élément à isoler d'une premier section S1 respectivement d'un diamètre D1 pour des éléments tubulaires, est introduit dans la cavité centrale 20, les parois de l'élément à isoler exercent une légère pression sur les parois 30, 40 de la cavité centrale et maintiennent l'isolateur tubulaire en place. La réduction de la section des chambres périphériques 50 est minimale. Lorsque l'on introduit un élément à isoler dont la section SI2 resp. le diamètre D2 est supérieur à SI1 (D1), la cavité centrale 20 se déforme de sorte que les bases convexes 40 de la cavité centrale 20 sont bombées et compriment les chambres périphériques 50. La pression exercée sur les chambres périphériques 50 augmente en fonction du diamètre D2. La section de ces chambres périphériques 50 diminue en conséquence. La réduction de la section des chambres périphériques 50 est bien entendu proportionnelle à l'augmentation du diamètre de l'élément à protéger.

### Liste des signes de référence :

- 10: isolateur tubulaire
- 20: cavité centrale
- 30: base concave
- 40: bases convexes
- 50: chambres périphériques
- D1: Diamètre du premier élément à isoler
- D2: Diamètre du premier élément à isoler

## Revendications

1. Isolateur tubulaire comprenant une cavité centrale délimitant une section S1, destinée à recevoir un élément à isoler tubulaire et au moins une chambre périphérique délimitant une section S2, dans lequel la section S1 de la cavité centrale est adaptée à recevoir un élément à isoler délimitant une section S1 et dans lequel la section S2 de la chambre périphérique est comprimée lorsque l'élément à isoler comporte une section SI2 avec SI2 > SI1.

2. Isolateur tubulaire selon la revendication 1, **caractérisé en ce que** la section de la cavité centrale S1 est supérieure ou égale à la section de l'élément à isoler (Sl1) et inférieure ou égale à la section de l'élément à isoler SI2.

3. Isolateur tubulaire selon la revendication 1 ou 2, **caractérisé en ce que** la section de la cavité centrale et de la chambre périphérique (S1 + S2) est supérieure ou égale à la section de l'élément à isoler SI2.

4. Isolateur tubulaire selon l'une quelconque des revendications précédentes, **caractérisé en ce que** la section de la chambre périphérique S2 est supérieure ou égale à la différence entre la section de l'élément à isoler SI2 et la section de l'élément SI1(S2 ≥ (SI2 - SI1)).

5. Isolateur tubulaire selon l'une quelconque des revendications précédentes, **caractérisé en ce que** la cavité centrale possède, en coupe, une forme substantiellement triangulaire.

6. Isolateur tubulaire selon la revendication 5, **caractérisé en ce qu'**une des bases de la cavité centrale substantiellement triangulaire est concave ou en arc de cercle.

7. Isolateur tubulaire selon la revendication 5, **caractérisé en ce que** deux des bases de la cavité centrale substantiellement triangulaire sont convexes.

8. Isolateur tubulaire selon l'une quelconque des revendications 5 à 7, **caractérisé par** deux ou trois chambres périphériques.

9. Isolateur tubulaire selon la revendication 8, **caractérisé en ce que** les chambres périphériques se situent le long des bases de la cavité centrale substantiellement triangulaire.

10. Isolateur tubulaire selon la revendication 9, **caractérisé en ce que** les chambres périphériques possèdent, en coupe, une forme substantiellement elliptique.

11. Isolateur tubulaire selon la revendication 1, **caractérisé en ce que** l'isolateur tubulaire est en mousse.

12. Isolateur tubulaire selon la revendication 7, **caractérisé en ce** la mousse comprend un ou plusieurs des polymères choisis parmi le groupe constitué de LDPE (polyéthylène à base densité), LLDPE (polyéthylène linéaire à base densité), HDPE (polyéthylène à haute densité), PP (polypropylène), PU (polyuréthane), PVC (polychlorure de vinyle), PS (polystyrène), SAN (Styrène acrylonitrile), EVA (acétate de vinyl éthylène), EBA (acétate de butyl éthylène), et EAA (acétate d'éthyl éthylène).

13. Isolateur tubulaire selon l'une quelconque des revendications précédentes, **caractérisé en ce que** la chambre périphérique est remplie d'air ou d'une mousse qui est plus compressible que le matériau formant l'isolateur tubulaire.

14. Isolateur tubulaire selon l'une quelconque des revendications précédentes, **caractérisé en ce que** l'isolateur tubulaire est un isolateur thermique.

15. Isolateur tubulaire selon l'une quelconque des revendications précédentes, **caractérisé en ce que** l'isolateur tubulaire est un isolateur acoustique.

16. Isolateur tubulaire selon l'une quelconque des revendications précédentes, **caractérisé en ce que** l'isolateur tubulaire est un isolateur contre les abrasions mécaniques ou chimiques.

17. Isolateur tubulaire selon l'une quelconque des revendications précédentes, **caractérisé en ce que** la cavité centrale est apte à recevoir un élément à isoler de section circulaire, de section ovale et/ou de section elliptique.
